## Europäisches Patentamt
## European Patent Office
## Office européen des brevets

(19)

(11) Publication number: **0 036 392**
**B1**

(12)

# EUROPEAN PATENT SPECIFICATION

(45) Date of publication of patent specification: **25.04.84**

(51) Int. Cl.³: **A 01 K 1/035, A 01 K 5/02**

(21) Application number: **81830024.6**

(22) Date of filing: **18.02.81**

(54) Cabinet for housing stalling cages provided with a mobile fodder trough, and for making the fodder accessible automatically according to a programme.

(30) Priority: **28.02.80 IT 2022080**

(43) Date of publication of application:
**23.09.81 Bulletin 81/38**

(45) Publication of the grant of the patent:
**25.04.84 Bulletin 84/17**

(84) Designated Contracting States:
**AT BE CH DE FR GB LI LU NL SE**

(56) References cited:
**CH - A - 253 204**
**US - A - 3 033 163**
**US - A - 3 124 104**
**US - A - 3 134 360**
**US - A - 3 628 505**
**US - A - 3 754 527**
**US - A - 4 085 705**

(73) Proprietor: **TECNIPLAST GAZZADA S.r.l.**
**Via lo Maggio, 6**
**Buguggiate(Varese) (IT)**

(72) Inventor: **Bernardini, Carlo**
**Via Gasparotto, 35**
**Varese (IT)**

(74) Representative: **Notarbartolo, Manfredi et al,**
**Studio Brevetti e Marchi NOTARBARTOLO &**
**GERVASI Viale Bianca Maria, 33**
**I-20122 Milano (IT)**

Courier Press, Leamington Spa, England.

## Cabinet for housing stalling cages provided with a mobile fodder trough, and for making the fodder accessible automatically according to a programme

This invention relates to a motorised cabinet, or laboratory rack, on one or more levels for housing stalling cages provided with a mobile fodder trough, in order to make the fodder automatically accessible or inaccessible to the animals according to a programme. The stalling cages considered herein are in particular those which form the subject matter of a copending patent application in the name of the same applicant (European Patent Application 81830025.3) in which the fodder trough and/or drinking vessel are constituted by a fixed part and a mobile part, the position of this mobile part being programmed and controlled automatically in such a manner as to bring the fodder and/or water either within reach or out of reach of the animals.

The cabinet, which as stated is motorised, provides the necessary power, the programming and the control.

Portable laboratory racks comprising a plurality of shelves in which laboratory animals cages are inserted are known from US Patent 4.085.705. Such cages however do not comprise automatically removable fodder troughs and removable drinking vessels.

A preferred embodiment of the present invention is represented by way of non-limiting example in the following figures, in which:

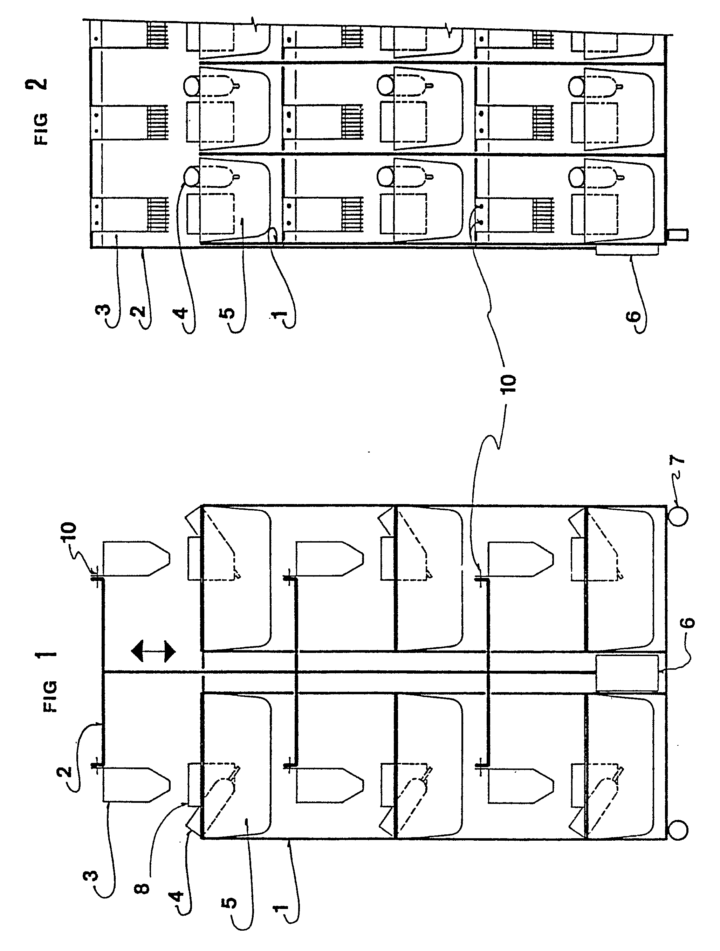

Figure 1 is a diagrammatic front view of the cabinet.

Figure 2 is a partial side view of the cabinet of Figure 1.

The cabinet is on three levels, and is constituted by an open topped framework 1 mobile on wheels, on which the cages comprising the fodder trough formed from the pieces 8 and 3 and the drinking vessel 4 rest by way of their flanges.

The cages can be inserted into and withdrawn from the cabinet in the manner of drawers, and are provided with suitable catches, not shown, for locking them in their working position.

The framework 1 is provided with a mobile frame 2 which is driven with vertical motion by means for example of a motor and gear-rack assembly indicated by 6.

In the figures, the frame is shown in its raised position, and the mobile parts 3 of the fodder troughs are suspended from it by means of bores 10 and bolts, not shown.

Various modifications can be made by the expert of the art to the cabinet according to the invention as defined in the claims.

In particular the cage is that of the European Patent Application No. 81830025.3. (EP—A—0035976).

## Claims

1. Laboratory rack for housing one or a plurality of vertically disposed rows of stalling cages (5) characterised in that the rack comprises an open topped framework (1) in which a plurality of cages (5) may rest by means of their flanges; a vertically movable framework (2) provided with arms to which a plurality of fodder troughs (3) and/or drinking vessels (4) are fixed; a motor assembly (6) which drives the vertically movable framework (2) so that when it is in its raised position the fodder troughs and/or drinking vessels connected to its arms are removed from the cages (5), when present, and rendered inaccessible to the animals, while when it is in its lowered position the fodder troughs and/or drinking vessels are rendered accessible to the animals; and wherein the motor assembly (6) is programmed for automatically raising and lowering the vertically movable framework (2) according to a schedule.

2. Laboratory rack according to claim 1, wherein the fixed framework is mounted on wheels.

## Patentansprüche

1. Laborgestell zur Aufnahme einer oder mehrerer vertikal angeordneter Reihen von Tierkäfigen (5), dadurch gekennzeichnet, daß das Gestell einen oben offenen Rahmen (1), in dem mehrere Käfige (5) mittels ihrer Flansche abstützbar sind; einen vertikal beweglichen Rahmen (2), der mit Armen versehen ist, an denen eine Vielzahl von Futtertrögen (3) und/oder Tringefäßen (4) befestigt ist; und eine Motoreinheit (6) aufweist, die den vertikal beweglichen Rahmen (2) antreibt, so daß die mit dessen Armen verbundenen Futtertröge und/oder Tringefäße, wenn sich dieser Rahmen in der angehobenen Stellung befindet, von den vorhandenen Käfigen (5) entfernt und für die Tiere nicht zugänglich sind, wogegen die Futtertröge und/oder Trinkgefäße, wenn sich dieser Rahmen in der abgesenkten Stellung befindet, den Tieren zugänglich sind; und daß die Motoreinheit (6) für ein selbsttätiges Anheben und und Absenken des vertikal beweglichen Rahmens gemäß einem Schema programmiert ist.

2. Laborgestell nach Anspruch 1, dadurch gekennzeichnet, daß der feste Rahmen auf Rädern gelagert ist.

## Revendications

1. Casier de laboratoire destinée à loger une ou plusieurs rangées disposées verticalement de cages de stabulation (5), caractérisé en ce que le casier comprend une ossature ouverte vers le haut (1) dans laquelle une pluralité de cages (5) peut reposer par l'intermédiaire de leur socle; un cadre mobile dans le sens vertical (2) muni de bras sur lesquels sont fixées plusieurs mangeoires (3) et/ou abreuvoirs (4); un ensemble à moteur (6) qui commande le cadre mobile dans le sens vertical (2) de façon que, lorsque celui-ci occupe sa position soulevée, les mangeoires et/ou les abreuvoirs fixés sur ces bras soient retirés des cages (5), lorsqu'elles sont présentes, soient rendus inaccessibles aux animaux, tandis que lorsqu'il occupe sa position abaissée, les mangeoires et/ou les abreuvoirs sont rendus accessibles aux animaux, et en ce que l'ensemble à moteur (6) est programmé pour soulever et abaisser automatiquement le cadre verticalement mobile (2) selon un programme.

2. Casier de laboratoire selon la revendication 1, caractérisé en ce que l'ossature fixé est montée sur roues.

FIG 1

FIG 2

0 036 392